# EUROPÄISCHE PATENTANMELDUNG

(11) **EP 4 726 962 A1**
(43) Veröffentlichungstag der Anmeldung: **15.04.2026**
(21) Anmeldenummer: 25208039.5
(22) Anmeldetag: 10.10.2025
(51) Int. Cl.: H02J 7/60, B25F 5/00, H02J 7/80

(54) **VERFAHREN ZUM ERFASSEN, OB EIN WERKZEUG AN EINEM AKKU ANGEBRACHT ODER GETRENNT IST, UND BESTANDSAUFNAHME DES WERKZEUGS**

(30) Priorität: 11.10.2024 DE 102024129525
(71) Anmelder: Adolf Würth GmbH & Co. KG, 74653 Künzelsau (DE)
(72) Erfinder: Hog, Jonas, 74523 Schwäbisch Hall (DE); Förstner, Dirk, 71384 Weinstadt (DE); Moshammer, Anton, 71640 Ludwigsburg (DE)
(74) Vertreter: Dilg, Haeusler, Schindelmann Patentanwaltsgesellschaft mbH

(57) **Zusammenfassung**

Die vorliegende Erfindung bezieht sich auf ein Verfahren zum Erfassen, ob ein Werkzeug (100) an einem Akku (200) angebracht ist, wobei das Werkzeug (100) an den Akku (200) anbringbar und von diesem wieder trennbar ist, wobei der Akku (200) mindestens eine Akkuzelle (240), eine Speichervorrichtung (220), eine Steuervorrichtung (210) und eine Sendevorrichtung (230) aufweist. Das Verfahren weist die folgende Schritte auf: Anbringen des Werkzeugs (100) an den Akku (200), wodurch eine erste Zustandsänderung eines Signals erzeugt wird, die von der Steuervorrichtung (210) erfasst wird; Speichern der ersten Zustandsänderung in die Speichervorrichtung (220); und Senden der ersten Zustandsänderung durch die Sendevorrichtung (230) an eine Empfangsvorrichtung.

## Beschreibung

Die Erfindung betrifft ein Verfahren zum Erfassen, ob ein Werkzeug an einem Akku angebracht oder getrennt ist. Das Verfahren kann für eine Bestandsaufnahme des Werkzeugs und des Akkus verwendet werden.

Bislang gibt es die Möglichkeit in einem Akku-Werkzeug-System, dass die "Intelligenz" im Akku oder im Werkzeug befindet, oder teilweise auf dem Akku und teilweise auf dem Werkzeug (Akku-Werkzeug-Schnittstelle). Für ein "intelligentes" Verarbeiten der Daten müssen hierzu der Akku und das Werkzeug "wach" bzw. im Standby-Modus sein. Die Verarbeitung der Daten kann über einen direkten, elektrischen Kontakt oder auch kabellos erfolgen. Für eine Inventarverwaltung muss klar sein, ob alle Werkzeuge und Akkus örtlich vorhanden sind, z.B. in einem Lieferwagen etc. Hierfür werden an den Werkzeugen Tracker montiert, oder in die Werkzeuge werden Funkmodule integriert oder eingesteckt. Diese Funkmodule können im Akku oder im Werkzeug angebracht sein, wie es aus WO 2021/030549 A1 bekannt ist, wobei diese Funkmodule untereinander oder auch mit einer zentralen Stelle kommunizieren können. Das Funkmodul benötigt eine eigene Energiequelle, z.B. eine Knopfzelle oder eine direkte Verbindung zum Akku.

Bei der Integration bzw. dem Einstecken des Funkmoduls in den Akku kann das Werkzeug nur dann Informationen senden, wenn die Verbindung zwischen Werkzeug und Akku besteht, und beide Geräte müssen betriebsbereit ("wach") sein. Bei der Verwendung von Knopfzellen werden zwei Tracker benötigt, d.h. je eine pro Akku und Werkzeug eine, was doppelte Kosten hervorruft und ggf. störend bei der Bedienung ist.

Falls er Tracker nur am Werkzeug vorhanden ist, wird der Akku wird nicht miterfasst. Falls der Tracker bzw. das Funkmodul nur am Akku vorhanden ist, wird das Werkzeug nicht erfasst, wenn es "schläft" bzw. sich im Standby-Modus befindet. Das Werkzeug muss ständig aus dem Standby-Modus "aufgeweckt" und angefragt werden, beispielsweise durch Pingen zum Detektieren, ob das Werkzeug noch angeschlossen ist. Daraus erfolgen über lange Laufzeiten große Ladungsverluste, ein hoher Verbrauch an Knopfzellenbatterien etc.

Der Benutzer möchte beispielsweise vor der Verwendung des Werkzeugs wissen, ob all seine Werkzeuge und Geräte z.B. in Regalen eines Lieferwagens vorhanden sind, oder ob eines der Werkzeuge nicht vorhanden ist. Dies kann er direkt durch eine dafür ausgelegte Software überprüfen, oder durch ein automatisiertes System. Der Benutzer möchte seine Geräte Werkzeuge über einen längeren Zeitraum (d.h. Monate bis Jahre) lagern und dennoch eine digitale und automatische Inventar-/Lagerbestandsverwaltung betreiben. Der Benutzer möchte keine zwei Funkeinheiten (je eine in Akku und Werkzeug) für die Inventar-/Lagerbestandsverwaltung einsetzen.

Aufgabe der vorliegenden Erfindung ist es, ein Verfahren bereitzustellen, welches es einem Akku ermöglicht, zu erkennen, ob ein Werkzeug angeschlossen ist. Es ist ferner die Aufgabe der vorliegenden Erfindung, zu überprüfen, ob ein verbundenes Werkzeug bereits in einer Inventardatenbank hinterlegt ist. Diese Aufgabe wird durch die Gegenstände der unabhängigen Patentansprüche gelöst. Vorteilhafte Weiterbildungen sind in den abhängigen Patentansprüchen definiert.

Gemäß einem ersten Aspekt der vorliegenden Erfindung ist ein Verfahren zum Erfassen vorgesehen, ob ein Werkzeug an einem Akku angebracht ist. Das Werkzeug ist an den Akku anbringbar und von diesem wieder trennbar. Der Akku weist mindestens eine Akkuzelle, eine Speichervorrichtung, eine Steuervorrichtung und eine Sendevorrichtung auf. Das Verfahren weist die folgende Schritte auf: Anbringen des Werkzeugs an den Akku, wodurch eine erste Zustandsänderung eines Signals erzeugt wird, die von der Steuervorrichtung erfasst wird; Speichern der ersten Zustandsänderung in die Speichervorrichtung; und Senden der ersten Zustandsänderung durch die Sendevorrichtung an eine Empfangsvorrichtung.

Gemäß einem zweiten Aspekt der vorliegenden Erfindung ist ein Akku vorgesehen, der dazu konfiguriert ist, dass ein Werkzeug daran anbringbar und von diesem wieder trennbar ist, wobei der Akku mindestens eine Akkuzelle, eine Speichervorrichtung, eine Steuervorrichtung und eine Sendevorrichtung aufweist. Der Akku ist dazu konfiguriert, beim Anbringen des Werkzeugs an den Akku eine erste Zustandsänderung eines Signals zu erzeugen, die von der Steuervorrichtung erfasst wird, die Speichervorrichtung ist dazu konfiguriert, die erste Zustandsänderung zu speichern; und die Sendevorrichtung ist dazu konfiguriert, die erste Zustandsänderung an eine Empfangsvorrichtung zu senden.

Im Kontext der vorliegenden Erfindung kann die Empfangsvorrichtung ein Server sein, der beispielsweise eine Inventarverwaltung durchführt, ein mobiles Endgerät oder eine externe Cloud.

Die Funktionsweise kann dergestalt sein, dass das Werkzeug auf den Akku aufgesteckt oder aufgeschoben wird, und ein Sensor detektiert ein Signal bzw. eine Signaländerung als die erste Zustandsänderung, die durch das Aufschieben des Werkzeugs auf den Akku (z.B. galvanischer Sensor (Drahtkontakt), kapazitiver Sensor, induktiver Sensor) verursacht wird. Dadurch wird die Steuervorrichtung, beispielsweise ein Mikrocontroller, des Akkus aus dem Ruhemodus bzw. Standby-Modus aufgeweckt. Der Mikrocontroller des Akkus kann eine Impedanzmessung am Werkzeug durchführen. Die gemessene Impedanz kann mit einer Inventartabelle bzw. -datenbank bekannter Werkzeuge abgeglichen werden. Die Inventartabelle bzw. -datenbank kann sich auf der Speichervorrichtung des Akkus, der Sendevorrichtung des Akkus, beispielsweise einem Funkmodulspeicher des Akkus, einem Mobile-Device-Speicher oder auf einer externen Cloud befinden.

Ist das Werkzeug (beispielsweise durch eine in der Vergangenheit bereits durchgeführte Impedanzmessung) bereits bekannt, kann eine Werkzeug-ID in der Speichervorrichtung des Akkus vermerkt werden; nachträglich kann diese Information mit einem Cloud-Speicher abgeglichen werden. Die Werkzeug-ID des Werkzeugs kann eine eindeutige Kennung des Werkzeugs sein, die einmalig vergeben wird und das Werkzeug eindeutig identifiziert.

Ist das Werkzeug unbekannt, kann es als neues Werkzeug in der Inventartabelle anhand der Impedanzmessung angelegt werden. Die Werkzeug-ID des neuen Werkzeugs bleibt anfangs unbekannt, bis das Werkzeug das erste Mal mit diesem Akku in Betrieb genommen wird und die Werkzeug-ID übermittelt wird.

Gemäß der vorliegenden Erfindung kann der Akku jederzeit detektieren, ob ein Werkzeug aufgesteckt ist, ohne dass der Akku oder das Werkzeug durch eine zusätzliche Interaktion als dem Zusammenstecken oder Abziehen aktiviert ("aufgeweckt") werden muss. Dies kann durch eine Signaländerung als die Zustandsänderung beim Aufstecken eines Werkzeugs auf den Akku (oder auch beim Abziehen des Werkzeugs von dem Akku) bewirkt werden. Die Steuervorrichtung, etwa der Microcontroller, des Akkus wird aus dem Standby-Modus aufgeweckt (es kann ein sog. "Interrupt" gefahren werden, welcher den Akku aus dem Standby-Modus aufweckt). Der Akku kann dadurch ein Aufstecken/Abziehen des Werkzeugs detektieren. Die erste Zustandsänderung wird auf den Speicher des Akkus geschrieben und kann an ein Funkmodul/IoT-Modul im Akku als die Sendevorrichtung des Akkus weitergegeben werden. Der Akku kann dann in einen Energiesparmodus wechseln bzw. wieder in den Standby-Modus zurückkehren ("einschlafen").

So kann eindeutig festgestellt werden, ob ein Werkzeug auf einem Akku aufgesteckt ist, ohne das Werkzeug aus dem Standby-Modus aufzuwecken. Zusätzlich kann der Akku erkennen, um welches Werkzeug es sich handelt.

Die Vorteile der vorliegenden Erfindung sind ein geringerer Energieverbrauch in der Anwendung sowie eine Langlebigkeit und konstante Energieversorgung, da der Akku länger hält und keine zwei Funkmodule mehr erforderlich sind. Darüber hinaus wird eine höhere Bedienfreundlichkeit durch einen geringeren Platzbedarf geschaffen, und es ist keine zusätzliche Interaktion nötig.

Gemäß einem Ausführungsbeispiel weist das Verfahren des Weiteren die folgenden Schritte auf: Messen einer elektrischen Größe des Werkzeugs durch die Steuervorrichtung, nachdem die erste Zustandsänderung des Signals erzeugt wurde; Vergleichen der elektrischen Größe mit im voraus bekannten elektrischen Größen, die in einer Datenbank oder einer Tabelle hinterlegt wurden, und denen jeweils ein bestimmter Werkzeug-Typ und/oder eine bestimmte Werkzeug-ID zugeordnet wurde; falls die gemessene elektrische Größe mit einer elektrischen Größe aus der Datenbank oder der Tabelle übereinstimmt, Identifizieren des Werkzeugs mit dem entsprechenden bestimmten Werkzeug-Typ und/oder der entsprechenden bestimmten Werkzeug-ID und Speichern des Werkzeug-Typs und/oder der Werkzeug-ID in der Speichervorrichtung; und gegebenenfalls Senden des Werkzeug-Typs oder der Werkzeug-ID durch die Sendevorrichtung an die Empfangsvorrichtung. Das Verfahren kann im Akku selbst oder in einer externen Umgebung durchgeführt werden, beispielsweise einem externen Server, einer externen Cloud oder einem mobilen Endgerät. Dabei kann die erste Zustandsänderung des Signals durch die Sendevorrichtung an die externe Umgebung gesendet werden. Die externe Umgebung kann die Datenbank oder die Tabelle aufweisen, beispielsweise in Gestalt einer Inventardatenbank. Die externe Umgebung ist mit der Empfangsvorrichtung verbunden und empfängt zudem den gesendeten Werkzeug-Typ oder die gesendete Werkzeug-ID. Falls das Verfahren im Akku selbst durchgeführt wird, kann der Schritt zum Senden des Werkzeug-Typs oder der Werkzeug-ID durch die Sendevorrichtung an die Empfangsvorrichtung entfallen bzw. die Empfangsvorrichtung ist in dem Akku enthalten.

Im Kontext der vorliegenden Erfindung kann der Werkzeug-Typ beispielsweise angeben, ob es sich bei dem Werkzeug um einen Schlagschrauber, einen Schlagbohrer, einen Meißel, eine Heißklebepistole, eine Säge oder ein anderes Werkzeug handelt. Die Werkzeug-ID des Werkzeugs kann eine eindeutige Kennung des Werkzeugs sein, die einmalig vergeben wird und das Werkzeug eindeutig identifiziert.

Falls die gemessene elektrische Größe mit keiner elektrischen Größe aus der Datenbank oder der Tabelle übereinstimmt, hat das Verfahren gemäß einem Ausführungsbeispiel Schritte zum Erzeugen eines neuen Werkzeug-Typs und/oder einer neuen Werkzeug-ID und Schreiben des neuen Werkzeug-Typs und/oder der neuen Werkzeug-ID in die Speichervorrichtung und in die Datenbank oder die Tabelle; und gegebenenfalls zum Senden des neuen Werkzeug-Typs und/oder der neuen Werkzeug-ID durch die Sendevorrichtung an die Empfangsvorrichtung. Falls das Verfahren im Akku selbst durchgeführt wird, entfällt der Schritt zum Senden des neuen Werkzeug-Typs oder der neuen Werkzeug-ID durch die Sendevorrichtung an die Empfangsvorrichtung.

Wenn das Werkzeug nach dem Anbringen des Werkzeug an den Akku wieder von diesem getrennt wird, wird gemäß einem Ausführungsbeispiel eine zweite Zustandsänderung des Signals erzeugt, die von der Steuervorrichtung erfasst wird, die zweite Zustandsänderung wird in die Speichervorrichtung gespeichert, und die zweite Zustandsänderung wird durch die Sendevorrichtung an die Empfangsvorrichtung gesendet. Falls ein Werkzeug-Typ oder eine Werkzeug-ID des Werkzeugs in der Speichervorrichtung gespeichert wurde, wird der Werkzeug-Typ und/oder die Werkzeug-ID aus der Speichervorrichtung gelöscht.

Die Funktionsweise kann dergestalt sein, dass das Werkzeug vom Akku abgezogen wird, so dass eine elektrische und mechanische Verbindung zwischen Akku und Werkzeug getrennt wird. Ein Sensor kann die Trennung der Verbindung zwischen Akku und Werkzeug erfassen, beispielsweise ein galvanischer Sensor (Drahtkontakt), ein kapazitiver Sensor, oder ein induktiver Sensor, wobei sich ein entsprechendes Sensorsignal ändert. Dadurch wird der Mikrocontroller des Akkus aus dem Standby-Modus aufgeweckt. Der Mikrocontroller des Akkus erkennt die Trennung vom Werkzeug. Die Verbindung zwischen Werkzeug und Akku wird kann in der Tabelle für Inventarverwaltung aufgehoben werden bzw. die Akku-ID und die Werkzeug-ID sind nicht mehr einander zugordnet; so steht die Werkzeug-ID wieder für eine neue Zuordnungsabfrage eines Akkus zur Verfügung.

Wenn die Steuervorrichtung vor dem Trennen des Werkzeugs in einem Ruhemodus ist, wird gemäß einem Ausführungsbeispiel die Steuervorrichtung durch die zweite Zustandsänderung des Signals in einen Betriebsmodus versetzt; und/oder die Steuervorrichtung wird nach dem Speichern der zweiten Zustandsänderung oder nach dem Senden der zweiten Zustandsänderung in den Ruhemodus versetzt.

Wenn die Steuervorrichtung vor dem Anbringen des Werkzeugs in einem Ruhemodus ist, wird gemäß einem Ausführungsbeispiel die Steuervorrichtung durch die erste Zustandsänderung des Signals in einen Betriebsmodus versetzt; und/oder die Steuervorrichtung wird nach dem Speichern der ersten Zustandsänderung oder nach dem Senden ersten der Zustandsänderung in den Ruhemodus versetzt.

Gemäß einem Ausführungsbeispiel weist das Verfahren des Weiteren einen Schritt einer Bestandsaufnahme in einer mit der Empfangsvorrichtung verbundenen Inventardatenbank als die Datenbank oder die Tabelle auf, in der die gesendeten Werkzeug-Typen und/oder die gesendeten Werkzeug-IDs gespeichert werden, deren entsprechende Werkzeuge an dem Akku angebracht oder von diesem getrennt wurden.

Gemäß einem Ausführungsbeispiel ist die Inventardatenbank einem bestimmten Lagerort zugeordnet und enthält zumindest Folgendes: alle Werkzeuge mit bekannter Werkzeug-ID, die in der Vergangenheit am Lagerort vorhanden waren; alle Werkzeuge mit bekannter Werkzeug-ID, die einem bestimmten Werkzeug-Typen angehören und einem bestimmten Akku zugeordnet sind, wobei in der Inventardatenbank die Werkzeug-ID mit einer Akku-ID und vorzugsweise auch mit der elektrischen Größe des Werkzeugs verknüpft gespeichert wird; alle Werkzeuge mit bekannter Werkzeug-ID, die einem bestimmten Werkzeug-Typen angehören und die keinem bestimmten Akku zugeordnet sind, wobei, sobald das Werkzeug an dem bestimmten Akku angebracht wird, in der Inventardatenbank die Werkzeug-ID mit einer Akku-ID und vorzugsweise auch mit der elektrischen Größe des Werkzeugs verknüpft gespeichert wird; alle Werkzeuge ohne bekannte Werkzeug-ID, die einem bestimmten Werkzeug-Typen angehören und die keinem bestimmten Akku zugeordnet sind, wobei, sobald das Werkzeug an dem bestimmten Akku angebracht wird, die Werkzeug-ID erfasst und in der Speichervorrichtung gespeichert wird, wobei in der Inventardatenbank die Werkzeug-ID mit einer Akku-ID und vorzugsweise auch mit der elektrischen Größe des Werkzeugs verknüpft gespeichert wird; alle Werkzeuge mit bekannter Werkzeug-ID, die einem bestimmten Werkzeug-Typen angehören und die einem bestimmten Akku zugeordnet sind, wobei, sobald das Werkzeug von dem bestimmten Akku getrennt wird, in der Inventardatenbank eine Verknüpfung der Werkzeug-ID mit der Akku-ID aufgelöst wird; alle Werkzeuge mit bekannter Werkzeug-ID, die einem bestimmten Werkzeug-Typen angehören und die keinem bestimmten Akku zugeordnet sind, wobei eine Zuordnung des Werkzeugs zu einem bestimmten Akku später erfolgt.

Sollte ein Werkzeug auf den Akku aufgesteckt werden, wacht der Akku aus dem Ruhemodus bzw. Standby-Modus auf. Nach dem "Aufwachen" aus dem Standby-Modus kann der Akku einen Impedanztest (Impedanzmessung) am Werkzeug durchführen und mit einer Inventardatenbank abgleichen, um was für ein Werkzeug bzw. um welchen Werkzeug-Typ es sich kategorisch handelt; des Weiteren kann mit der Inventardatenbank abgeglichen werden, ob dieses Werkzeug bereits bekannt ist, und wenn ja, ob dieses einem Akku zugeordnet ist. In der Inventardatenbank kann jeder Werkzeug-Typ aller für den Benutzer verfügbaren (erwerbbaren) Werkzeuge, beispielsweise aus einem Power-Werkzeug-Portfolio jeweils einem vordefinierten Impedanzwert zugeordnet werden (z.B. Impedanzwert 1 für Akku-Bohrschrauber, Impedanzwert 2 für Akku-Schlagschrauber, Impedanzwert 3 für Akku-Bohrhammer, usw....); anhand dieser Inventardatenbank kann direkt kategorisiert werden bzw. erkannt werden, um was für ein Werkzeug es sich grundsätzlich handelt. In der Inventardatenbank bzw. der Tabelle für die Inventarverwaltung (z.B. im Lieferwagen) kann Folgendes aufgelistet sein: Alle Werkzeuge, welche in der Vergangenheit bereits im System erfasst worden sind; Werkzeuge, welche kategorisiert und eindeutig einem Akku zugewiesen sind, d.h. Werkzeug-ID verknüpft mit Akku-ID; Werkzeuge, welche per Werkzeug-Typ kategorisiert, aber noch nicht eindeutig (mit ID) einer Akku-ID zugeordnet/zugewiesen sind (die Zuordnung Akku-ID & Werkzeug-ID kann in der Inventardatenbank anschließend ergänzt/gespeichert werden.

Die Aufnahme eines Werkzeugs in die Inventardatenbank bzw. die Tabelle für die Inventarverwaltung kann wie folgt durchgeführt werden: Wenn das Werkzeug für den Akku bereits bekannt ist (per Impedanzwert aus der Datenbank), können die Akku-ID und die Werkzeug-ID einander zugeordnet und in der Tabelle für die Inventarverwaltung ergänzt werden. Wenn das Werkzeug für den Akku unbekannt ist, kann über ein Statusupdate der Impedanzmessung das neue Werkzeug in die Tabelle für Inventarverwaltung aufgenommen werden, wobei die Werkzeug-ID noch unbekannt sein kann. Sobald dieses neue Werkzeug mit dem Akku kommuniziert, wird die Werkzeug-ID der Akku-ID zugeordnet und in der Tabelle abgespeichert; ebenso wird hier die Impedanz des Werkzeugs zugeordnet/ergänzt.

Wenn Werkzeug mit Akku verbunden ist, können folgende Schritte durchgeführt werden: Beim Trennen des Werkzeugs vom Akku wacht der Akku aus dem Ruhemodus bzw. Standby-Modus auf, und der Status des Werkzeugs kann von "gekoppelt" / "verknüpft" auf "nicht gekoppelt" / "nicht verknüpft" mit dem Akku geändert werden, d.h. dieses Werkzeug ist nicht mehr dem Akku zugeordnet. Das Werkzeug bleibt in der Tabelle für Inventarverwaltung gespeichert, jedoch ohne Verknüpfung/Kopplung mit einem Akku. Für eine erneute Kopplung / Verknüpfung muss dieses Werkzeug wieder an den Akku angeschlossen werden.

Gemäß einem Ausführungsbeispiel werden die erste und die zweite Zustandsänderung des Signals durch einen elektrischen Schalter oder eine galvanische Kopplung bewirkt, oder sie werden durch einen induktiven Sensor oder einen kapazitiven Sensor erfasst. Bei einem Ausführungsbeispiel kann der Sensor als ein metallischer Kontakt geschlossen oder geöffnet werden (analog zu einem Schalter Taster). Dieser metallische Kontakt kann mit den Werkzeugkontakten geschlossen werden. Die Detektion muss nicht unbedingt mit einem direkten galvanischen Kontakt erfolgen. Auch andere Sensoren sind möglich, zum Beispiel kapazitive Sensoren (Schichtkondensator, in den eine Platte eingebracht wird), induktive Sensoren (magnetischer Kreis, der unterbrochen wird oder umgelenkt wird).

Gemäß einem Ausführungsbeispiel ist der Akku mit einer Lokalisierungseinrichtung versehen, die dazu konfiguriert ist, einen Ort des Akkus zu ermitteln und den Ort über die Sendevorrichtung an die Empfangsvorrichtung zu senden.

Gemäß einem Ausführungsbeispiel ist die elektrische Größe des Werkzeugs eine am Werkzeug erfasste Impedanz oder eine Eigenfrequenz eines im Werkzeug verbauten Schwingkreises, wobei die elektrische Größe des Werkzeugs vorzugsweise einen Werkzeug-Typ des Werkzeugs oder eine Werkzeug-ID angibt. Als Alternative zur Impedanzmessung kann die Detektion einer Akku-Werkzeug-Verbindung auch über den Schwingkreis erfolgen. Beispiel hierfür in jedem Gerätetyp wird ein spezieller RC-Schwingkreis eingebaut. Durch eine elektrische Anregung kann der Werkzeug-Typ bzw. eine Geräteklasse am Akku bestimmt werden.

Gemäß einem Ausführungsbeispiel weist das Werkzeug keine eigene, fest eingebaute Batterie oder keinen eigenen, fest eingebauten Akku auf.

Im Folgenden werden exemplarische Ausführungsbeispiele der vorliegenden Erfindung mit Verweis auf die folgenden Figuren detailliert beschrieben.
Figur 1 zeigt schematisch ein Werkzeug und einen Akku gemäß einem Ausführungsbeispiel.
Figur 2 zeigt schematisch das Werkzeug und den Akku gemäß dem Ausführungsbeispiel.
Figur 3 zeigt gemäß einem Ausführungsbeispiel Verfahrensschritte, die beim Anbringen eines Werkzeugs an einen Akku ausgeführt werden.
Figur 4 zeigt gemäß einem Ausführungsbeispiel Verfahrensschritte, die beim Trennen eines Werkzeugs von einem Akku ausgeführt werden.
Figur 5 zeigt eine Inventartabelle bzw. Inventardatenbank gemäß einem Ausführungsbeispiel.

Gleiche oder ähnliche Komponenten in unterschiedlichen Figuren sind mit gleichen Bezugsziffern versehen.

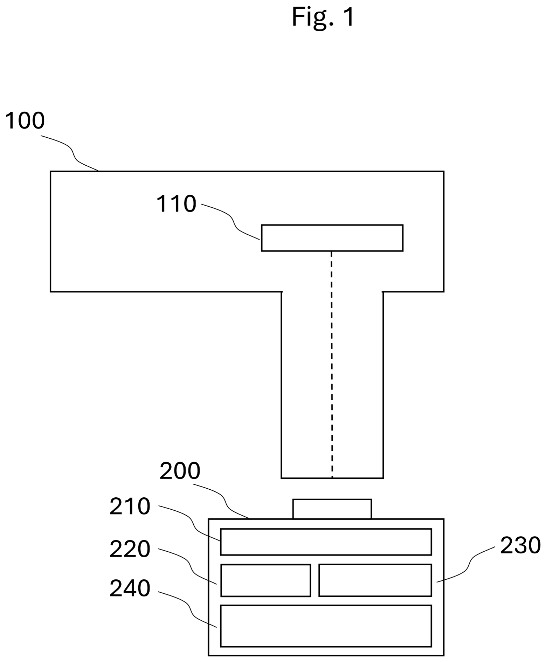

**Figur 1** zeigt schematisch ein Werkzeug 100 und einen Akku 200 gemäß einem Ausführungsbeispiel, die noch voneinander getrennt sind. Der Akku 200 weist mindestens eine Akkuzelle 240, eine Speichervorrichtung 220, eine Steuervorrichtung 210 und eine Sendevorrichtung 230 auf. Das Werkzeug 100 kann beispielsweise ein Schlagschrauber, ein Schlagbohrer, ein Meißel, eine Heißklebepistole, eine Säge oder ein anderes Werkzeug sein. Das Werkzeug 100 weist eine Werkzeugsteuervorrichtung 110 auf. Vorzugsweise weist das Werkzeug 100 keine eigene, fest eingebaute Batterie und keinen eigenen, fest eingebauten Akku auf.

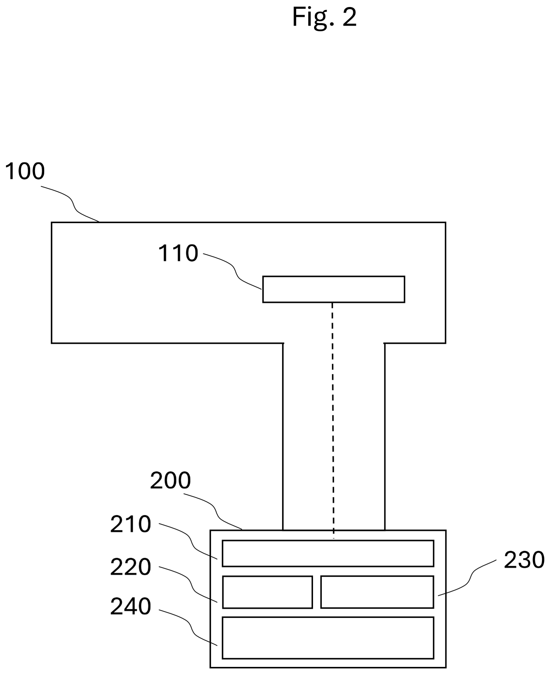

**Figur 2** zeigt schematisch das Werkzeug 100 und den Akku 200 gemäß dem Ausführungsbeispiel, wobei das Werkzeug 100 an dem Akku 200 angebracht ist. Dabei gelangen zumindest Stromversorgungskontakte des Werkzeugs 100 und des Akkus 200 mechanisch und elektrisch miteinander in Kontakt.

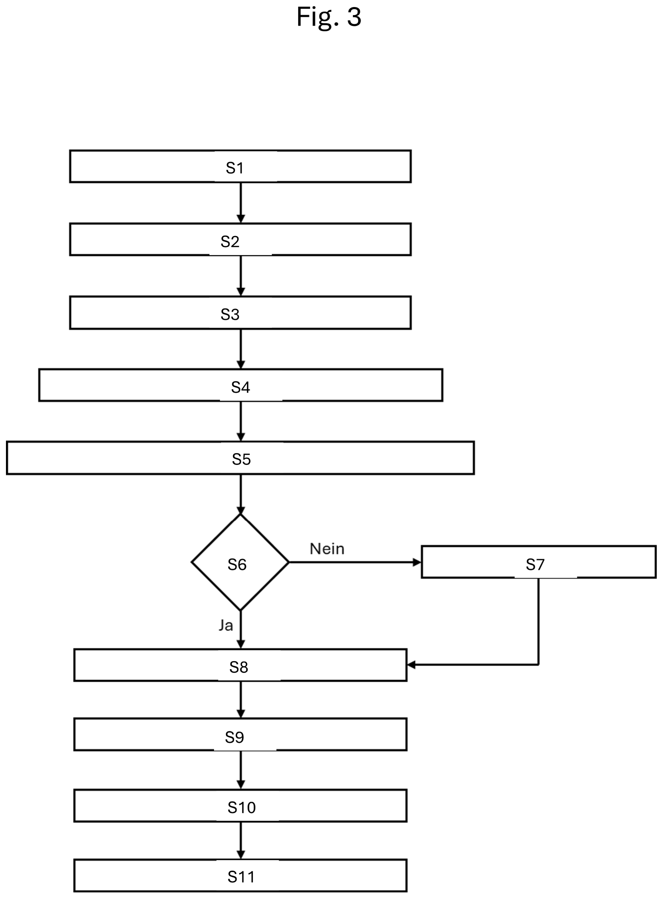

**Figur 3** zeigt gemäß einem Ausführungsbeispiel Verfahrensschritte, die beim Anbringen des Werkzeugs 100 an den Akku 200 ausgeführt werden. Dabei wird gleichzeitig eine Bestandsaufnahme in einer mit der Empfangsvorrichtung verbundenen Inventardatenbank durchgeführt, in der die gesendeten Werkzeug-Typen oder die gesendeten Werkzeug-IDs gespeichert werden, deren entsprechende Werkzeuge 100 an dem Akku 200 angebracht oder von diesem getrennt wurden.

Bei einem Schritt S1 ist das Werkzeug 100 vom Akku 200 getrennt, und die Steuervorrichtung 210 des Akkus 200 befindet sich in einem Ruhemodus bzw. Stand-by-Modus. Vorzugsweise ist der Ruhemodus ein Energiesparmodus, bei dem weniger Leistung verbraucht wird als in einem Betriebsmodus, bei dem der Akku 200 beispielsweise dazu eingerichtet ist, Energie zum Betrieb des Werkzeugs 100 abzugeben oder um Daten über die Sendevorrichtung 230 an eine Empfangsvorrichtung zu senden.

Bei einem Schritt S2 wird das Werkzeug 100 durch einen Benutzer an dem Akku 200 angebracht. Dabei gelangen zumindest Stromversorgungskontakte des Werkzeugs 100 und des Akkus 200 mechanisch und elektrisch miteinander in Kontakt. Durch das Anbringen des Werkzeugs 100 an den Akku 200 wird eine erste Zustandsänderung eines Signals erzeugt, die von der Steuervorrichtung 210 des Akkus 200 erfasst wird. Die erste Zustandsänderung des Signals kann durch einen elektrischen Schalter oder eine galvanische Kopplung bewirkt werden. Die erste Zustandsänderung des Signals kann auch durch einen induktiven Sensor oder einen kapazitiven Sensor erfasst werden. Die erste Zustandsänderung wird dann in die Speichervorrichtung 220 des Akkus 200 gespeichert. Die erste Zustandsänderung wird durch die Sendevorrichtung 230 an eine Empfangsvorrichtung gesendet. Die Empfangsvorrichtung kann ein Server sein, der mit der Inventardatenbank verbunden ist. Die Inventur kann über den Server abgewickelt werden.

Bei einem Schritt S3 wird ebenfalls durch das Anbringen des Werkzeugs 100 an den Akku 200 oder durch die erste Zustandsänderung des Signals die Steuervorrichtung 210 des Akkus 200 in den Betriebsmodus versetzt. Dadurch wird die volle Funktionalität des Akkus 200 bereitgestellt.

Bei einem Schritt S4 führt die Steuervorrichtung 210 des Akkus 200 ein Messen einer elektrischen Größe des Werkzeugs 100 durch, nachdem die erste Zustandsänderung des Signals erzeugt wurde. Die elektrische Größe des Werkzeugs 100 kann eine am Werkzeug 100 erfasste Impedanz oder eine Eigenfrequenz eines im Werkzeug 100 verbauten Schwingkreises sein, wobei die elektrische Größe des Werkzeugs 100 vorzugsweise einen Werkzeug-Typ des Werkzeugs 100 und weiter bevorzugt eine Werkzeug-ID angibt. Der Werkzeug-Typ kann beispielsweise angeben, ob es sich bei dem Werkzeug 100 um einen Schlagschrauber, einen Schlagbohrer, einen Meißel, eine Heißklebepistole, eine Säge oder ein anderes Werkzeug handelt. Die Werkzeug-ID des Werkzeugs 100 kann eine eindeutige Kennung des Werkzeugs sein, die einmalig vergeben wird und das Werkzeug 100 eindeutig identifiziert.

Bei einem Schritt S5 wird die elektrischen Größe, vorliegend die gemessene Impedanz, mit im voraus bekannten elektrischen Größen verglichen, die in der Inventardatenbank hinterlegt wurden und denen jeweils ein bestimmter Werkzeug-Typ oder eine bestimmte Werkzeug-ID zugeordnet wurde.

Bei einem Schritt S6 wird anhand des Vergleiches bestimmt, ob das Werkzeug 100 bereits bekannt ist oder nicht.

Falls die gemessene elektrische Größe mit keiner elektrischen Größe aus der Inventardatenbank übereinstimmt, wird bei einem Schritt S7 ein neuer Werkzeug-Typ oder eine neue Werkzeug-ID generiert, und der neue Werkzeug-Typ oder die neue Werkzeug-ID wird in die Speichervorrichtung 220 und in die Inventardatenbank geschrieben. Falls der neue Werkzeug-Typ oder die neue Werkzeug-ID durch die Steuervorrichtung 210 des Akkus 200 erzeugt wird, wird der neue Werkzeug-Typ oder die neue Werkzeug-ID durch die Sendevorrichtung 230 an die Empfangsvorrichtung gesendet.

Falls die gemessene elektrische Größe mit einer elektrischen Größe aus der Inventardatenbank übereinstimmt, wird bei Schritten S8 bis S10 das Werkzeug 100 mit dem entsprechenden bestimmten Werkzeug-Typ oder der entsprechenden bestimmten Werkzeug-ID identifiziert, und der Werkzeug-Typ oder die Werkzeug-ID werden in der Speichervorrichtung 220 gespeichert. Der Werkzeug-Typs oder die Werkzeug-ID werden durch die Sendevorrichtung 230 an die Empfangsvorrichtung gesendet. In der Inventardatenbank wird die Werkzeug-ID mit einer Akku-ID und vorzugsweise auch mit der elektrischen Größe des Werkzeugs 100 verknüpft gespeichert, so dass das Werkzeug 100 dem Akku 200 zugeordnet ist.

Bei einem Schritt S11 ist das Werkzeug 100 betriebsbereit.

Wenn die Steuervorrichtung 210 vor dem Anbringen des Werkzeugs 100 in einem Ruhemodus ist, kann die Steuervorrichtung 210 des Akkus 200 durch die erste Zustandsänderung des Signals in einen Betriebsmodus versetzt werden. Die Steuervorrichtung 210 kann nach dem Speichern der ersten Zustandsänderung oder nach dem Senden ersten der Zustandsänderung in den Ruhemodus versetzt werden.

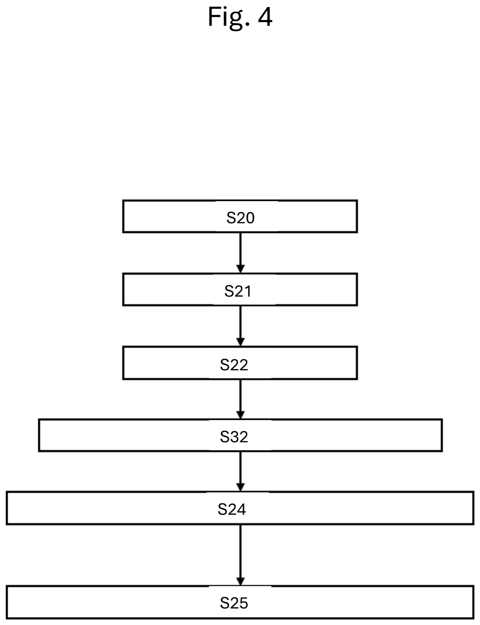

**Figur 4** zeigt gemäß einem Ausführungsbeispiel Verfahrensschritte, die beim Trennen eines Werkzeugs 100 von einem Akku 200 ausgeführt werden. Bei einem Schritt S20 befindet sich die Steuervorrichtung 210 des Akkus 200 im Ruhemodus, und das Werkzeug 200 ist an dem Akku 200 angebracht.

Bei einem Schritt S21 wird das Werkzeug 100 von dem Akku 200 getrennt.

Bei einem Schritt S22 wird eine zweite Zustandsänderung des Signals erzeugt, die von der Steuervorrichtung 210 des Akkus 200 erfasst wird, und die Steuervorrichtung 210 wird durch die zweite Zustandsänderung des Signals in einen Betriebsmodus versetzt.

Bei einem Schritt S23 wird dadurch die Trennung des Werkzeugs 100 von dem Akku 200 erkannt, und die zweite Zustandsänderung wird in die Speichervorrichtung 220 gespeichert.

Bei einem Schritt S24 wird die zweite Zustandsänderung durch die Sendevorrichtung 230 an die Empfangsvorrichtung gesendet, und falls ein Werkzeug-Typ oder eine Werkzeug-ID des Werkzeugs 100 in der Speichervorrichtung 220 gespeichert wurde, wird der Werkzeug-Typ oder die Werkzeug-ID aus der Speichervorrichtung 220 des Akkus 200 gelöscht. Gleichzeitig wird in der Inventardatenbank eine Verknüpfung der Werkzeug-ID des Werkzeugs 100 mit der Akku-ID des Akkus 200 entfernt bzw. aufgelöst. Die Steuervorrichtung 210 kann nach dem Speichern der zweiten Zustandsänderung oder nach dem Senden der zweiten Zustandsänderung wieder in den Ruhemodus versetzt werden.

Bei einem Schritt S25 bleibt jedoch die Werkzeug-ID in der Inventardatenbank erhalten, wobei sie nicht mehr mit der Akku-ID des Akkus 200 verknüpft ist.

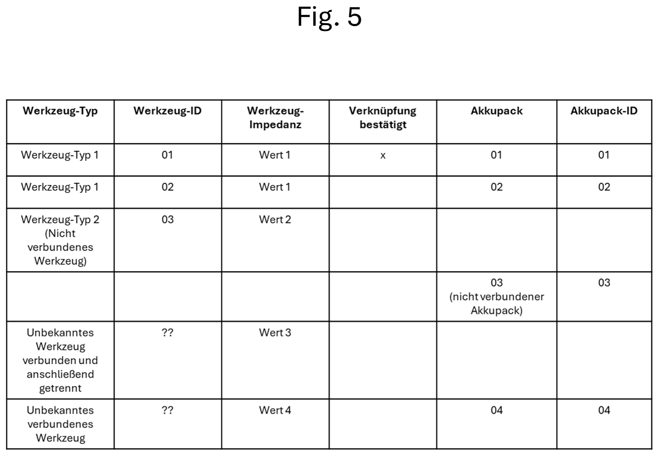

**Figur 5** zeigt eine Inventartabelle bzw. Inventardatenbank gemäß einem Ausführungsbeispiel. Es handelt sich hier beispielhaft um eine Matrix mit Zeilen und Spalten. In den Zeilen sind Werkzeug-Typen aufgeführt, die anhand der elektrischen Größe wie beispielsweise der Impedanz des Werkzeugs 100 identifiziert werden können. In den ersten beiden Zeilen der Inventardatenbank sind zwei mit einem Akku 200 verbundene Werkzeuge 100 eines Werkzeug-Typs 1 gespeichert, die einen entsprechenden Impedanzwert 1 haben. Diese Werkzeuge 100 haben die Werkzeug-IDs 01 bzw. 02 und sind mit verschiedenen Akkus 200 mit einer Akku-ID von 01 bzw. 02 verbunden.

In Zeile 1, Spalte 4 sind Akku-ID 01 und die Werkzeug-ID 01 erfolgreich miteinander verknüpft, d.h. die Verknüpfung ist bestätigt, da alle Schritte S1 bis S10 des Flussdiagramms in der Figur 3 durchgeführt worden sind. In Zeile 2, Spalte 4 sind die Akku-ID 02 und die Werkzeug-ID 02 nicht miteinander verknüpft. Die IDs werden erst miteinander abgeglichen, wenn das Werkzeug im Betriebsmodus ist (Schritt S9). Das ist in Zeile 2 nicht der Fall; hier hat noch keine Kommunikation zwischen Akku 200 und Werkzeug 100 stattgefunden. Durch die Impedanzmessung ist nur bekannt, um welchen Werkzeug-Typ es sich handelt.

In der dritten Zeile der Inventardatenbank ist ein nicht mit einem Akku 200 verbundenes Werkzeug 100 mit der Werkzeug-ID 03 eines anderen Werkzeug-Typs 03 gespeichert. Dieses Werkzeug 100 ist nicht an einem Akku 200 angebracht.

In den letzten beiden Zeilen der Inventardatenbank ist ein Werkzeug 100 gespeichert, das zwar mit einem Akku 200 mit der Akku-ID 04 verbunden ist, dessen Werkzeug-Typ und Werkzeug-ID jedoch nicht bekannt sind. Es wird eine Impedanz mit dem Wert 4 gemessen, die nicht zugeordnet werden kann.

Die Inventardatenbank kann einem bestimmten Lagerort zugeordnet sein, wie beispielsweise einem bestimmten Regal oder einem bestimmten Werkzeugwagen. Optional kann der Akku 200 mit einer Lokalisierungseinrichtung versehen ist, die dazu konfiguriert ist, einen Ort des Akkus 200 zu ermitteln und den Ort über die Sendevorrichtung 230 an die Empfangsvorrichtung zu senden. Die Lokalisierungseinrichtung kann eine GPS-Einrichtung sein.

In der Inventardatenbank kann zumindest Folgendes erfasst werden: alle Werkzeuge 100 mit bekannter Werkzeug-ID, die in der Vergangenheit am Lagerort vorhanden waren; alle Werkzeuge 100 mit bekannter Werkzeug-ID, die einem bestimmten Werkzeug-Typen angehören und einem bestimmten Akku 200 zugeordnet sind, wobei in der Inventardatenbank die Werkzeug-ID mit einer Akku-ID und vorzugsweise auch mit der elektrischen Größe des Werkzeugs 100 verknüpft gespeichert wird; alle Werkzeuge 100 mit bekannter Werkzeug-ID, die einem bestimmten Werkzeug-Typen angehören und die keinem bestimmten Akku 200 zugeordnet sind, wobei, sobald das Werkzeug 100 an dem bestimmten Akku 200 angebracht wird, in der Inventardatenbank die Werkzeug-ID mit einer Akku-ID und vorzugsweise auch mit der elektrischen Größe des Werkzeugs 100 verknüpft gespeichert wird; alle Werkzeuge 100 ohne bekannte Werkzeug-ID, die einem bestimmten Werkzeug-Typen angehören und die keinem bestimmten Akku 200 zugeordnet sind, wobei, sobald das Werkzeug 100 an dem bestimmten Akku 200 angebracht wird, die Werkzeug-ID erfasst und in der Speichervorrichtung 220 gespeichert wird, wobei in der Inventardatenbank die Werkzeug-ID mit einer Akku-ID und vorzugsweise auch mit der elektrischen Größe des Werkzeugs 100 verknüpft gespeichert wird; alle Werkzeuge 100 mit bekannter Werkzeug-ID, die einem bestimmten Werkzeug-Typen angehören und die einem bestimmten Akku 200 zugeordnet sind, wobei, sobald das Werkzeug 100 von dem bestimmten Akku 200 getrennt wird, in der Inventardatenbank eine Verknüpfung der Werkzeug-ID mit der Akku-ID aufgelöst wird; alle Werkzeuge 100 mit bekannter Werkzeug-ID, die einem bestimmten Werkzeug-Typen angehören und die keinem bestimmten Akku 200 zugeordnet sind, wobei eine Zuordnung des Werkzeugs 100 zu einem bestimmten Akku 200 später erfolgt.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 100: Werkzeug
- 110: Werkzeugsteuervorrichtung
- 200: Akku
- 210: Steuervorrichtung
- 220: Speichervorrichtung
- 230: Sendevorrichtung
- 240: Akkuzelle

## Patentansprüche

1. Verfahren zum Erfassen, ob ein Werkzeug (100) an einem Akku (200) angebracht ist, wobei das Werkzeug (100) an den Akku (200) anbringbar und von diesem wieder trennbar ist, wobei der Akku (200) mindestens eine Akkuzelle (240), eine Speichervorrichtung (220), eine Steuervorrichtung (210) und eine Sendevorrichtung (230) aufweist, wobei das Verfahren die folgende Schritte aufweist:
Anbringen des Werkzeugs (100) an den Akku (200), wodurch eine erste Zustandsänderung eines Signals erzeugt wird, die von der Steuervorrichtung (210) erfasst wird;
Speichern der ersten Zustandsänderung in die Speichervorrichtung (220); und
Senden der ersten Zustandsänderung durch die Sendevorrichtung (230) an eine Empfangsvorrichtung.

2. Verfahren gemäß dem vorherigen Anspruch, des Weiteren mit Schritten zum:
Messen einer elektrischen Größe des Werkzeugs (100) durch die Steuervorrichtung (210), nachdem die erste Zustandsänderung des Signals erzeugt wurde;
Vergleichen der elektrischen Größe mit im voraus bekannten elektrischen Größen, die in einer Datenbank oder einer Tabelle hinterlegt wurden, und denen jeweils ein bestimmter Werkzeug-Typ und/oder eine bestimmte Werkzeug-ID zugeordnet wurde;
falls die gemessene elektrische Größe mit einer elektrischen Größe aus der Datenbank oder der Tabelle übereinstimmt, Identifizieren des Werkzeugs (100) mit dem entsprechenden bestimmten Werkzeug-Typ und/oder der entsprechenden bestimmten Werkzeug-ID und Speichern des Werkzeug-Typs und/oder der Werkzeug-ID in der Speichervorrichtung (220); und
gegebenenfalls Senden des Werkzeug-Typs und/oder der Werkzeug-ID durch die Sendevorrichtung (230) an die Empfangsvorrichtung.

3. Verfahren gemäß dem vorherigen Anspruch, wobei
falls die gemessene elektrische Größe mit keiner elektrischen Größe aus der Datenbank oder der Tabelle übereinstimmt, Erzeugen eines neuen Werkzeug-Typs und/oder einer neuen Werkzeug-ID und Schreiben des neuen Werkzeug-Typs und/oder der neuen Werkzeug-ID in die Speichervorrichtung (220) und in die Datenbank oder die Tabelle; und
gegebenenfalls Senden des neuen Werkzeug-Typs und/oder der neuen Werkzeug-ID durch die Sendevorrichtung (230) an die Empfangsvorrichtung.

4. Verfahren gemäß einem der vorherigen Ansprüche, wobei
wenn das Werkzeug (100) nach dem Anbringen des Werkzeug (100) an den Akku (200) wieder von diesem getrennt wird, eine zweite Zustandsänderung des Signals erzeugt wird, die von der Steuervorrichtung (210) erfasst wird;
Speichern der zweiten Zustandsänderung in die Speichervorrichtung (220);
Senden der zweiten Zustandsänderung durch die Sendevorrichtung (230) an die Empfangsvorrichtung; und
falls ein Werkzeug-Typ und/oder eine Werkzeug-ID des Werkzeugs (100) in der Speichervorrichtung (220) gespeichert wurde, Löschen des Werkzeug-Typs und/oder der Werkzeug-ID aus der Speichervorrichtung (220).

5. Verfahren gemäß dem vorherigen Anspruch, wobei
wenn die Steuervorrichtung (210) vor dem Trennen des Werkzeugs (100) in einem Ruhemodus ist, die Steuervorrichtung (210) durch die zweite Zustandsänderung des Signals in einen Betriebsmodus versetzt wird; und/oder
die Steuervorrichtung (210) nach dem Speichern der zweiten Zustandsänderung oder nach dem Senden der zweiten Zustandsänderung in den Ruhemodus versetzt wird.

6. Verfahren gemäß einem der vorherigen Ansprüche, wobei
wenn die Steuervorrichtung (210) vor dem Anbringen des Werkzeugs (100) in einem Ruhemodus ist, die Steuervorrichtung (210) durch die erste Zustandsänderung des Signals in einen Betriebsmodus versetzt wird; und/oder
die Steuervorrichtung (210) nach dem Speichern der ersten Zustandsänderung oder nach dem Senden ersten der Zustandsänderung in den Ruhemodus versetzt wird.

7. Verfahren gemäß einem der Ansprüche 2 bis 5, des Weiteren mit einem Schritt einer Bestandsaufnahme in einer mit der Empfangsvorrichtung verbundenen Inventardatenbank als die Datenbank oder die Tabelle, in der die gesendeten Werkzeug-Typen oder die gesendeten Werkzeug-IDs gespeichert werden, deren entsprechende Werkzeuge an dem Akku (200) angebracht oder von diesem getrennt wurden.

8. Verfahren gemäß dem vorherigen Anspruch, wobei
die Inventardatenbank einem bestimmten Lagerort zugeordnet ist und zumindest Folgendes enthält:
alle Werkzeuge (100) mit bekannter Werkzeug-ID, die in der Vergangenheit am Lagerort vorhanden waren;
alle Werkzeuge (100) mit bekannter Werkzeug-ID, die einem bestimmten Werkzeug-Typen angehören und einem bestimmten Akku (200) zugeordnet sind, wobei in der Inventardatenbank die Werkzeug-ID mit einer Akku-ID und vorzugsweise auch mit der elektrischen Größe des Werkzeugs (100) verknüpft gespeichert wird;
alle Werkzeuge (100) mit bekannter Werkzeug-ID, die einem bestimmten Werkzeug-Typen angehören und die keinem bestimmten Akku (200) zugeordnet sind, wobei, sobald das Werkzeug (100) an dem bestimmten Akku (200) angebracht wird, in der Inventardatenbank die Werkzeug-ID mit einer Akku-ID und vorzugsweise auch mit der elektrischen Größe des Werkzeugs (100) verknüpft gespeichert wird;
alle Werkzeuge (100) ohne bekannte Werkzeug-ID, die einem bestimmten Werkzeug-Typen angehören und die keinem bestimmten Akku (200) zugeordnet sind, wobei, sobald das Werkzeug (100) an dem bestimmten Akku (200) angebracht wird, die Werkzeug-ID erfasst und in der Speichervorrichtung (220) gespeichert wird, wobei in der Inventardatenbank die Werkzeug-ID mit einer Akku-ID und vorzugsweise auch mit der elektrischen Größe des Werkzeugs (100) verknüpft gespeichert wird;
alle Werkzeuge (100) mit bekannter Werkzeug-ID, die einem bestimmten Werkzeug-Typen angehören und die einem bestimmten Akku (200) zugeordnet sind, wobei, sobald das Werkzeug (100) von dem bestimmten Akku (200) getrennt wird, in der Inventardatenbank eine Verknüpfung der Werkzeug-ID mit der Akku-ID aufgelöst wird;
alle Werkzeuge (100) mit bekannter Werkzeug-ID, die einem bestimmten Werkzeug-Typen angehören und die keinem bestimmten Akku (200) zugeordnet sind, wobei eine Zuordnung des Werkzeugs (100) zu einem bestimmten Akku (200) später erfolgt.

9. Verfahren gemäß einem der vorherigen Ansprüche, wobei
die erste und die zweite Zustandsänderung des Signals durch einen elektrischen Schalter oder eine galvanische Kopplung bewirkt oder durch einen induktiven Sensor oder einen kapazitiven Sensor erfasst werden.

10. Verfahren gemäß einem der vorherigen Ansprüche, wobei
der Akku (200) mit einer Lokalisierungseinrichtung versehen ist, die dazu konfiguriert ist, einen Ort des Akkus (200) zu ermitteln und den Ort über die Sendevorrichtung (230) an die Empfangsvorrichtung zu senden.

11. Verfahren gemäß einem der Ansprüche 2 bis 10, wobei
die elektrische Größe des Werkzeugs (100) eine am Werkzeug (100) erfasste Impedanz oder eine Eigenfrequenz eines im Werkzeug (100) verbauten Schwingkreises ist, wobei die elektrische Größe des Werkzeugs (100) vorzugsweise einen Werkzeug-Typ des Werkzeugs (100) oder eine Werkzeug-ID angibt.

12. Verfahren gemäß einem der vorherigen Ansprüche, wobei
das Werkzeug (100) keine eigene, fest eingebaute Batterie oder keinen eigenen, fest eingebauten Akku aufweist.

13. Akku (200), der dazu konfiguriert ist, dass ein Werkzeug (100) daran anbringbar und von diesem wieder trennbar ist, wobei der Akku (200) mindestens eine Akkuzelle (240), eine Speichervorrichtung (220), eine Steuervorrichtung (210) und eine Sendevorrichtung (230) aufweist, wobei
der Akku (200) dazu konfiguriert ist, beim Anbringen des Werkzeugs (100) an den Akku (200) eine erste Zustandsänderung eines Signals zu erzeugen, die von der Steuervorrichtung (210) erfasst wird,
die Speichervorrichtung (220) dazu konfiguriert ist, die erste Zustandsänderung zu speichern; und
die Sendevorrichtung (230) dazu konfiguriert ist, die erste Zustandsänderung an eine Empfangsvorrichtung zu senden.
